# EUROPÄISCHE PATENTSCHRIFT

(11) **EP 1 499 193 B1**
(45) Veröffentlichungstag und Bekanntmachung des Hinweises auf die Patenterteilung: **08.06.2011**
(21) Anmeldenummer: 03725038.8
(22) Anmeldetag: 15.04.2003
(51) Int. Cl.: A01N 65/00, A01N 25/02, A01N 43/04, A01N 27/00

(54) **CITRONELLA JAVA ÖL ENTHALTENDE ZUSAMMENSETZUNG UND DEREN VERWENDUNG ZUR ABWEHR VON INSEKTEN**
COMPOSITION CONTAINING CITRONELLA JAVA OIL AND USE THEREOF FOR REPELLING INSECTS
COMPOSITION CONTENANT DE L'ESSENCE DE CITRONNELLE DE JAVA ET SON UTILISATION POUR REPOUSSER LES INSECTES

(30) Priorität: 29.04.2002 DE 10219109
(43) Veröffentlichungstag der Anmeldung: 26.01.2005
(73) Patentinhaber: FULLTEC AG, 6301 Zug (CH)
(72) Erfinder: BENCSITS, Franz, A-3400 Klosterneuburg (AT)
(74) Vertreter: Grünecker, Kinkeldey, Stockmair & Schwanhäusser Anwaltssozietät
(86) Internationale Anmeldenummer: PCT/EP2003/003944
(87) Internationale Veröffentlichungsnummer: WO 2003/092383

(56) Entgegenhaltungen:
- EP-A- 0 630 571
- WO-A-93/04158
- DATABASE WPI Section Ch, Week 199952 Derwent Publications Ltd., London, GB; Class C03, AN 1999-609285 XP002249289 & SE 9 800 767 A (STRAND H), 11. September 1999 (1999-09-11)

## Beschreibung

Die vorliegende Erfindung betrifft ein Insektenabwehrmittel (Repellent) gegen fliegende, stechende, beissende und saugende Insekten, sowie Lästlinge der Gattung Acarina (Milben und Zecken).

Repellentien sind chemische Substanzen, die auf Insekten und Acarina abstossend wirken. Große praktische Bedeutung hat ihre Anwendung in der Human- und Veterinärhygiene, wo sie Mensch und Tier vor Befall mit blutsaugenden, stechenden, beißenden und damit nicht nur lästigen, sondern auch potentiell krankheitsübertragenden (Malaria, FSME, Lyme-Borreliose u.v.a.m.) Schädlingen schützen. Bei unmittelbar auf die Haut aufzutragenden Repellentien ist es erforderlich, dass sie hautverträglich, ungiftig, schweiß- und lichtecht und in kosmetischer, damit äußerlich nicht hautbeeinträchtigender (Austrocknung, Faltenbildung) und pharmakologisch-gesundheitlicher (Irritationen, Penetration in tiefere Hautschichten und in den Blut- und Lymphkreislauf) Hinsicht einwandfrei sind. Außerdem soll der Schutz der behandelten Hautpartien, oder der Schutz von Mensch und Tier durch behandelte Umgebungsgegenstände möglichst lange Zeit anhalten und die Wirkungsbreite der Repellentien möglichst groß sein, d.h. sie sollen gegen möglichst viele, unterschiedliche Schädlinge und Lästlinge wirken.

In der Vergangenheit und in geringerem Maße bis heute wurden und werden etherische Öle, wie Citronell-und Lemongras-, sowie Nelken-, Lavendel- und Eukalyptusöl, sowie Campher als Repellentien eingesetzt, die aber allesamt gravierende Nachteile aufweisen, die da z.B. sind:
- bedenkliche Inhaltsstoffe, wie z. B. Eugenol in Nelkenöl, das im Experiment als carzinogen, mutagen und hautreizend befunden wurde, oder Cineol im Öl aus Eucalyptus globulus, das auf der Haut im Stande ist, heftig juckende Exantheme hervorzurufen,
- nur kurzzeitige Wirksamkeit, da die etherischen Öle allesamt schnell durch die Körpertemperatur von der Hautoberfläche abdunsten und damit häufige Nachbehandlungen notwendig sind, um den Schutz zu gewährleisten,
- völlig fehlende Lichtechtheit und damit die permanente Gefahr von Phytosensibilisierung und Produktveränderungen bereits vor Anwendung.

In der jüngeren Vergangenheit wurden sie daher überwiegend durch sogenannte synthetische Repellentien ersetzt. Im Stand der Technik angewandte synthetische Repellentien sind z.B. Phtalsäuredimethylester, 1,2-Ethylhexan-1,3-diol, 3,4-dihydro-2,2-dimethyl-4-oxo-2H-pyran-6-carbonsäure-n-butylester, Bernsteinsäuredipropylester, N,N-Diethyl-3-methyl-benzamid (DEET - auch N,N-Diethyl-m-toluamid) und Pyridin-2,5-dicarbonsäure-di-n-proylester (Ullmanns Encyclopädie der techn. Chemie, 4. Auflage, Bd. 13, S. 237 ff., 1977). In letzter Zeit wird verstärkt Hydroxyethylbutylpiperidincarboxylat [1-Piperidinecarboxylic acid-2-(2-hydroxyethyl)-1-methylpropylester] eingesetzt. Häufig sind diese synthetischen Repellentien jedoch nicht schweissbeständig, reizen die Schleimhäute und sind ebenso im Stande durch die oberste Hautschicht zu penetrieren und sich damit im Körper zu akkumulieren, wobei die daraus resultierenden Nebenwirkungen noch nicht vollständig erforscht sind, aber berechtigter Verdacht auf schädliche Auswirkungen nahegelegt ist.

Demgemäß liegt der vorliegenden Erfindung die Aufgabe zu Grunde, ein wirksames Insektenabwehrmittel für den Auftrag direkt auf die Haut, und/oder die Kleidung und/oder andere, den sich vor lästigen, schädlichen oder krankheitsübertragenden Stichen und Bissen von Insekten und Acariden (insbesondere Zecken) schützen wollenden Anwender umgebende Gegenstände und Materialien (Bettwäsche, Zeltplanen, Tischdecken etc.) auf Basis natürlicher und naturidentischer Rohstoffe mit geringstem toxikologischen Risiko zur Verfügung zu stellen, das außerdem über einen möglichst langen Zeitraum hinweg eine hohe Wirksamkeit entfaltet.

Diese Aufgabe wird erfindungsgemäß durch ein Insektenabwehrmittel nach Anspruch 1 gelöst. Bevorzugte Ausgestaltungen sind in den Unteransprüche angegeben. Die Wirksamkeit der erfindungsgemäßen Zusammensetzung beruht auf einer Komposition von Substanzen, die seit langer Zeit als Insektenabwehrmittel bekannt sind, aber wegen ihrer zu kurzzeitigen und daher häufig ungenügenden Wirksamkeit nicht, oder kaum mehr verwendet werden.

Im folgenden werden die erfindungsgemäß eingesetzten einzelnen Komponenten der Zusammensetzung beschrieben.

Das erfindungsgemäß verwendete Citronellöl (auch Bartgrasöl genannt) ist ein Naturprodukt, dass üblicher Weise durch Wasserdampfdestillation geeigneter Rohprodukte gewonnen wird. Dieses Naturprodukt umfasst als Hauptbestandteil Citronellal, Geraniol, Borneol und Citronellol, neben weiteren Terpenderivaten. Erfindungsgemäß wirksam ist jedoch anspruchsgemäß nur ein natürliches Citronellöl, das das Citronella Java Öl aus Cymbopogon Winterianus Jowitt ist. Diese Pflanze, aus der das erfindungsgemäß wirksame etherische Öl gewonnen wird, kommt auf Bali sowie einigen Nachbarinseln vor. Das Produkt ist z.B. kommerziell von der Firma Düllberg-Konzentra (Hamburg) erhältlich. Überraschender Weise ist dagegen beispielsweise das Citronella Indonesia Öl aus Cymbopogon Nardus nicht wirksam.

Das erfindungsgemäß verwendete pflanzliche Triglycerid kann irgendein pflanzliches Triglycerid sein. Bevorzugt ist das pflanzliche Triglycerid jedoch Kokosöl und/oder Sojaöl, die einzeln oder in Mischungen eingesetzt werden können. Die beiden bevorzugten Öle sind dabei in ihrer Wirksamkeit in der erfindungsgemäßen Zusammensetzung gleich. Neben natürlichem Kokosöl bzw. Sojaöl können erfindungsgemäß auch naturidentische Mischungen synthetisch oder natürlich gewonnener Triglyceride eingesetzt werden, die in ihrer Mischung dann den Naturprodukten entsprechen.

Kokosöl ist ein schmalzweiches, weißes bis schwachgelbliches Öl, mit einem Schmelzpunkt bei 20 bis 23°C. Das Kokosöl kann durch Pressen uns Extraktion der Samen der Kokospalme gewonnen werden. Kokosöl ist dabei eine Mischung verschiedener Triglyceride, deren genaue Zusammensetzung in Abhängigkeit vom Herkunftsort und den Wachstumsbedingungen der Rohprodukte variiert. Eine typische Zusammensetzung ist im folgenden angeführt:

| **Fettsäure** | **Anteil (Gew.%)** |
|---|---|
| Hexansäure | 0,2-1,0 |
| Octansäure | 5,4-8,0 |
| Decansäure | 6,5-8,5 |
| Laurinsäure | 45,0-51,0 |
| Myristinsäure | 16,5-18,5 |
| Palmitinsäure | 9,0-10,5 |
| Stearinsäure | 2,0-2,3 |
| Behensäure | 0,2-0,4 |
| Ölsäure, | 8,0-10,0 |
| Linolsäure | 0,7-1,0 |

Das erfindungsgemäß eingesetzte Sojaöl ist ein Naturprodukt, dass hauptsächlich in Form eines gelblichen bis braungelben, Fetten und halbtrockenen Öls vorkommt, das durch Pressen und/oder Extraktion mit Kohlenwasserstoffen aus Sojabohnen oder Sojaschrot gewonnen wird. Auch das Sojaöl ist eine Mischung von verschiedenen Triglyceriden, deren Zusammensetzung wiederum in Abhängigkeit von den Ausgangsprodukten variieren kann. Eine typische Zusammensetzung, die jedoch nur die Hauptkomponenten berücksichtigt, ist im folgenden angeführt.

| **Fettsäure (Kohlenstoffanzahl: Anzahl an Doppelbindungen)** | **Anteil (Gew.%(häufigster Wert))** |
|---|---|
| C16:0 | 7,0-14(10) |
| C18:0 | 1,4-4.5(4,0) |
| C18:1 | 19-30(21) |
| C18:2 | 44-62(56) |
| C18:3 | 4 - 11 (8) |

Neben den oben angeführten Fettsäuren umfasst Sojaöl geringere Mengen, an Fettsäuren mit 14 oder weniger Köhlenstoffatomen (weniger als 0,6 Gew.%), einen geringen Anteil an C16-Fettsäuren mit einer Doppelbindung (weniger als 0,5 Gew.%), sowie geringe Mengen an Fettsäuren mit 20 bzw. 22 Kohlenstoffatomen und null bzw. einer Doppelbindung (jeweils weniger als 1,0 Gew.%).

Die erfindungsgemäß eingesetzte organische Säure kann irgendeine natürlich gewonnene oder synthetisch gewonnene Säure sein. Bevorzugt sind erfindungsgemäß organische Säuren, ausgewählt aus der Gruppe Zitronensäure, Benzoesäure, Milchsäure, Sorbinsäure, Apfelsäure, Weinsäure, Gluconsäure, Fumarsäure, und Bernsteinsäure, wobei insbesondere aus toxikologischen und dermatologischen Gründen Zitronensäure, Benzolsäure, Milchsäure, Sorbinsäure, Apfelsäure und Weinsäure bevorzugt sind, unter denen wiederum Zitronensäure, Apfelsäure und Milchsäure bevorzugt sind.

Neben den oben genannten wesentlichen Bestandteilen kann die Zusammensetzung der vorliegenden Erfindung noch weitere Hilfsstoffe aufführen, die sich in Abhängigkeit von der gewählten Art der Zusammensetzung ergeben. Bevorzugte zusätzliche Bestandteile sind jedoch Natriumhydrogencarbonat (bevorzugt in einer Menge von 0,5 bis 2,0 Gew.% insbesondere 0,8 bis 1,2 Gew.%) sowie Castorölprodukte (insbesondere hydriertes Castoröl mit Polyethylenglycol (40)) (bevorzugt in einer Menge von 1,5 bis 4,0 Gew.%, insbesondere bevorzugt 2,0 bis 2,5 Gew.%). Das Natriumhydrogencarbonat dient dabei der Einstellung des pH-Werts auf einen in der Kosmetik üblichen Bereich von 5,5 bis 6. Das Castorölderivat dagegen ist ein sehr effektiver Emulgator, der lebensmittelrechtlich und kosmetisch-pharmazeutisch zugelassen ist. Durch die effektive Verteilung in Tröpfchenform, die durch den Einsatz dieses Emulgatoren erreicht werden kann ist die Emulsionsstabilität der erfindungsgemäßen Zusammensetzung, wenn sie in Emulsionsform vorliegt, verbessert, was gleichzeitig die gleichmäßige Verteilung der aktiven Komponenten sichert, so dass beispielsweise bei einer Verpackung in einer Flasche gesichert ist, dass jede entnommene Teilmenge der Gesamtfüllung die gleiche Zusammensetzung aufweist.

Weiterhin stellt die vorliegende Erfindung die Verwendung der erfindungsgemäßen Zusammensetzung zur Insektenabwehr zur Verfügung. Alle als bevorzugt gekennzeichneten Ausführungsformen der erfindungsgemäßen Zusammensetzung sind auch hier für die erfindungsgemäße Verwendung mit umfasst.

Wie die später angeführten Testreihen zeigen (siehe Abschnitt Beispiele), haben diese Substanzen in reiner Form, oder aber auch in Mischungen außerhalb der erfindungsgemäßen Zusammensetzungen und auch unter Zusatz von weiteren, im Rahmen dieser Forschungen zur Anwendung gelangenden Substanzen ein nicht ausreichendes Wirksamkeitsspektrum.

Daher ist es überraschend, dass die erfindungsgemäße Zusammensetzung, wie die Untersuchungen aber ergeben, (auch unter Zugabe von weiteren Hilfsstoffen die selbst aber keine insektenabwehrende Wirkung aufweisen), Wirksamkeiten aufweisen, die nicht nur den oben angeführten Naturstoffen, sondern auch synthetischen Repellentwirkstoffen deutlich überlegen sind.

Die einzelnen Bestandteile der erfindungsgemäßen Zusammensetzung sind in den in Anspruch 1 angegebenen Mengen enthaltend. Bevorzugte Mengenbereiche für das etherische Citronella Java Öl sind 7,5 bis 30 Gew.% und stärker bevorzugt 10 bis 20 Gew.%. Das pflanzliche Triglycerid ist bevorzugt in einer Menge von 4,5 bis 15 Gew.% enthaltend, stärker bevorzugt in einer Menge von 4,5 bis 10,5 Gew.%. Die erfindungsgemäß eingesetzte organische Säure liegt bevorzugt in einer Menge von 0,5 bis 4,5 Gew.% vor, stärker bevorzugt von 1 bis 2 Gew.%.

Das erfindungsgemäß eingesetzte Lösungsmittel bzw. der erfindungsgemäß eingesetzte Trägerstoff ist bevorzugt Wasser oder eine wässrige Lösung eines organischen Lösungsmittels. Wasser ist als Lösungsmittel erfindungsgemäß bevorzugt.

Der erfindungsgemäß einzusetzende Trägerstoff kann ein bekannter fester Träger sein, der keine nachteiligen Auswirkungen auf die erfindungsgemäße Zusammensetzung hat. Als mögliche Trägerstoffe können anorganische Oxide und sonstige im pharmazeutischen Bereich bekannte feste Trägerstoffe genannt werden.

### Bevorzugte erfindungsgemäße Zusammensetzungen enthalten:

| | |
|---|---|
| 4,5 bis 50 | Gew.% Citronellöl |
| 3 bis 30 | Gew.% Kokosöl und /oder Sojabohnenöl, |
| 10 bis 92,4 | Gew.% Wasser und |
| 0,1 bis 10 | Gew.% Citronensäure |

### Bevorzugt enthält eine erfindungsgemäße Zusammensetzung:

| | |
|---|---|
| 7,5 bis 30 | Gew.% Citronellöl |
| 4,5 bis 15 | Gew.% Kokos-/Sojaöl |
| 50 bis 87 | Gew.% Wasser und |
| 0,5 bis 4,5 | Gew.% Citronensäure |

### Besonders bevorzugt enthält eine erfindungsgemäße Zusammensetzung:

| | |
|---|---|
| 10 bis 20 | Gew.% Citronella Java Öl |
| 4,5 bis 10,5 | Gew.% Kokos-/Sojaöl |
| 68 bis 84 | Gew.% Wasser und |
| 1 bis 2 | Gew.% Citronensäure |

Desweiteren stellt die vorliegende Erfindung ein Verfahren zur Herstellung der erfindungsgemäßen Zusammensetzung zur Verfügung. Dabei erfolgt, zur Erzielung eines anwendungsgerechten, stabilen Produktes, die Herstellung zweckmäßigerweise nach folgendem Verfahren:
a) in einem dicht verschließbaren Gefäß wird das pflanzliche Triglycerid, bevorzugt Kokos -und/oder Sojaöl vorgelegt und unter Rühren bei 80°C geschmolzen
b) die organische Säure wird in kaltem Wasser gelöst und unter Rühren in die Fettschmelze eingebracht, dann
c) das Citronellöl unter Rühren eingearbeitet und bis zur Erzielung einer stabilen Emulsion über 5 Stunden bei 80°C gerührt, und
d) unter Rühren auf 25°C abgekühlt.

Die Herstellung ist mit allen, in der Kosmetik und Pharmazie gebräuchlichen Herstell- und Produktionsgeräten ohne weiteres möglich.

Die Herstellung kann unter Anwendung der üblichen Verfahrensweisen, die dem Fachmann bekannt sind so ausgestaltet werden, dass die erfindungsgemäße Zusammensetzung in Form einer Emulsion, Dispersion, Lotion, Creme, Gel oder Lösung vorliegt. Die Vorzüge der einzelnen Formen ergeben sich im Hinblick auf die jeweiligen Anwendungen.

Zur Herstellung dieser Formen können alle allgemein üblichen Präparationsverfahren zum Einsatz kommen.

Ebenso können dabei die üblichen Grundstoffe und Additive eingesetzt werden.

Sie umfassen die üblicherweise für chemisch-technische, kosmetische und pharmazeutische Zubereitungen verwendeten Lösungsmittel, Lösungsbeschleuniger, Lösungsvermittler, Emulgatoren, Netzmittel, Antischaummittel, Salzbildner, Puffer, Gelbildner, Filmbildner, Verdickungsmittel, Bindemittel, Gleitmittel, Spreitmittel, Antiklebmittel, Fließregulierungsmittel, Feuchthalte- und Trockenmittel, saure und alkalische pH-Regulatoren, wie organische Säuren und Fruchtsäuren oder Hydroxide von Erdalkalimetallen, Amine uns Amide, Füll- und Hilfsstoffe, wie Antioxidantien, Konservierungsmittel, Geruchskorrigentien und Färbemittel.

Der Begriff "Emulsion" umfasst in diesem Zusammenhang alle dispersen Systeme aus zwei oder mehreren, nicht miteinander mischbaren Flüssigkeiten, wobei die Emulsionspartner bei Raumtemperatur auch als feste Stoffe oder amorphe und kristalline Wachse vorliegen können. Diese Emulsionen können Makro- oder Mikroemulsionen sein. Typischerweise werden Wasser-in-Öl und/oder Öl-in-Wasser Emulsionen verwendet. Zur Verringerung der Grenzflächenarbeit (aufzuwendende Arbeit zum Emulgieren) werden Emulgatoren verwendet.

Emulgatoren sind üblicherweise oberflächenaktive Stoffe, typischerweise mit hydrophilen Endgruppen. Typische Beispiele davon umfassen:
➢ anionische Emulgatoren, d.s. Emulgatoren mit Carboxylat-,Sulfonat-, Sulfat-Phosphat-, Polyphosphat-, Lactat-, Citrat-, Tartrat-, Glucose- oder Polyglucoseendgruppen
➢ kationische Emulgatoren, d.s. Emulgatoren mit Aminsalz- oder quartären Ammoniumendgruppen
➢ amphothere und zwitterionische Emulgatoren, d.s. Emulgatoren mit zwitterionischen oder Betainendgruppen, sowie
➢ nichtionische Emulgatoren, d.s. Emulgatoren mit Alkohol-, Polyether-, Glycerin-, Sorbit-, Pentaerythrit-, Saccharose-, Essigsäure und/oder Milchsäureresten in der Endgruppe.

Alle Emulgatoren beinhalten zudem lipophile Endgruppen, wie Alkyl- oder Alkenylreste, jeweils geradkettig, verzweigt oder cyclisch, sowie Aryl- und Alkarylreste.

Weiterhin können hydrophile Seitengruppen wie Hydroxyl-, Ester-, Sulfamid-, Amid-, Amin-, Polyamid-Polyamin-, Ether-, Polyether-, Glycerin-, Sorbit-, Pentaerythrit- oder Saccharosegruppen enthalten sein.

Der Begriff "Gele" umfasst in Bezug auf die vorliegende Erfindung formbeständige, leicht deformierbare, an Flüssigkeiten reiche Systeme aus mindestens zwei Komponenten. Üblicherweise sind diese beiden Komponenten: a) eine Flüssigkeit und b) ein fester, kolloidal verteilter Stoff, wie Gelatine, Kieselsäure, Montmorillonit, Bentonit, Polysaccharide, Polyacrylate, Pektine uvam. Die Flüssigkeit a) kann im vorliegende Fall die erfindungsgemäße Zusammensetzung sein.

Die vorliegenden Beispiele illustrieren die vorliegende Erfindung. Dazu wurden die folgenden Zusammensetzungen hergestellt:
1.) alle unter der Sammelkennung **PC** (1 bis 16) angeführten Beispiele stellen Einzelsubstanzen und deren Mischungen außerhalb der erfindungsgemäßen Zusammensetzungen dar, wobei die Mischungen aber nach obiger, als erfindungsgemäß beschriebenen Herstellungsweise gefertigt wurden. Diese Vergleichsproben zeigen in nachfolgenden Testreihen eindeutig, dass nur erfindungsgemäße Zusammensetzungen auch wirksam sind:
   PC 1 = 100,00 Gew.% Citronella Java Öl aus Cymbopogon winterianus Jowitt
   PC 2 = 100,00 Gew.% Kokosöl, gereinigt und hydriert, Feed Grade
   PC 3 = 100,00 Gew.% Sojabohnenöl, Feed Grade
   PC 4 = 100,00 Gew.% Citronensäure, 60%ige Lösung in Wasser
   PC 5 = 51,00 Gew.% Citronella Java Öl + 49,00 Gew.% Kokosöl
   PC 6 = 51,00 Gew.% Citronella Java Öl + 49,00 Gew.% Sojaöl
   PC 7 = 51,00 Gew.% Citronella Java Öl + 31,00 Gew.% Kokosöl + 18,00 Gew.% Wasser
   PC 8 = 51,00 Gew.% Citronella Java Öl + 31,00 Gew.% Sojaöl + 18,00 Gew.% Wasser
   PC 9 = 4,00 Gew.% Citronella Java Öl + 31,00 Gew.% Kokosöl + 64,50 Gew.% 60%ige Lösung von Citronensäure in Wasser (36,00% Citronensäure + 24,00% Wasser)
   PC10 = 4,00 Gew.% Citronella Java Öl + 31,00 Gew.% Kokosöl + 64,50 Gew.% 0,10%ige Lösung von Citronensäure in Wasser (0,065% Citronensäure + 64,935% Wasser)
   PC11 = 51,00 Gew.% Citronella Java Öl + 2,00 Gew.% Sojaöl + 47,00 Gew.% 40%ige Lösung von Citronensäure in Wasser (18,80% Citronensäure + 28,20% Wasser)
   PC12 = 51,00 Gew.% Citronella Java Öl + 2,00 Gew.% Sojaöl + 47,00 Gew.% 0,15%ige Lösung von Citronensäure in Wasser (0,094% Citronensäure + 46,906% Wasser)
   PC13 = 51,00 Gew.% Citronella Java Öl + 2,50 Gew.% Kokosöl + 2,50 Gew.% Natriumhydrogencarbonat + 10,50 Gew.% Citronensäure + 33,50 Gew.% Wasser
   PC14 = 4,00 Gew.% Citronella Java Öl + 15,50 Gew.% Kokosöl + 15,50 Gew.% Sojaöl + 2,50 Gew.% Natriumhydrogencarbonat + 0,09 Gew.% Citronensäure + 62,41 Gew.% Wasser
   PC15 = 51,00 Gew.% Citronella Java Öl + 1,25 Gew.% Kokosöl + 1,25 Gew.% Sojaöl + 2,50 Gew.% Natriumhydrogencarbonat + 10,50 Gew.% Citronensäure + 4,50 Gew.% PEG-40 hydrogenated Castor Oil (USP) + 28,50 Gew.% Wasser
   PC16 = 4,00 Gew.% Citronella Java Öl + 15,50 Gew.% Kokosöl + 15,50 Gew.% Sojaöl + 2,50 Gew.% Natriumhydrogencarbonat + 0,09 Gew.% Citronensäure + 4,50 Gew.% PEG-40 hydrogenated Castor Oil (USP) + 57,41 Gew.% Wasser
2.) Das unter der Bezeichnung **REF** getestete Produkt ANTI BRUMM ist ein Handelsprodukt, das als eines der best wirksamen Produkte des Marktes bekannt ist. Es enthält als Wirkstoff 30,00Gew.% DEET (Diethyl-toluamid) und zeigt in seinen Ergebnissen eine gleichartige bis eindeutig schlechtere Wirksamkeit im Vergleich zu den erfindungsgemäßen Zusammensetzungen.
3.) alle unter der Sammelbezeichnung **WS** geführten Beispiele stellen erfindungsgemäße
   Zusammensetzungen dar:
   WS 1 = 4,50 Gew.% Citronella Java Öl + 3,50 Gew.% Kokosöl + 0,10 Gew.% Citronensäure + 91,90 Gew.% Wasser
   WS 2 = 4,50 Gew.% Citronella Java Öl + 3,50 Gew.% Sojaöl + 0,10 Gew.% Citronensäure+ 91,90 Gew.% Wasser
   WS 3 = 4,50 Gew.% Citronella Java Öl + 30,00 Gew.% Kokosöl + 0,10 Gew.% Citronensäure + 65,40 Gew.% Wasser
   WS 4 = 4,50 Gew.% Citronella Java Öl + 30,00 Gew.% Sojaöl + 0,10 Gew.% Citronensäure + 65,40 Gew.% Wasser
   WS 5 = 50,00 Gew.% Citronella Java Öl + 3,00 Gew.% Kokosöl + 10,00 Gew.% Citronensäure + 37,00 Gew.% Wasser
   WS 6 = 50,00 Gew.% Citronella Java Öl + 3,00 Gew.% Sojaöl + 10,00 Gew.% Citronensäure + 37,00 Gew.% Wasser
   WS 7 = 50,00 Gew.% Citronella Java Öl + 30,00 Gew.% Kokosöl + 10,00 Gew.% Citronensäure + 10,00 Gew.% Wasser
   WS 8 = 50,00 Gew.% Citronella Java Öl + 30,00 Gew.% Sojaöl+ 10,00 Gew.% Citronensäure + 10,00 Gew.% Wasser
   WS 9 = 7,50 Gew.% Citronella Java Öl + 4,50 Gew.% Kokosöl + 0,50 Gew.% Citronensäure + 87,00 Gew.% Wasser
   WS 10 = 7,50 Gew.% Citronella Java Öl + 14,50 Gew.% Kokosöl + 4,50 Gew.% Citronensäure + 72,50 Gew.% Wasser
   WS 11 = 30,00 Gew.% Citronella Java Öl + 4,50 Gew.% Sojaöl + 4,50 Gew.% Citronensäure + 60,00 Gew.% Wasser
   WS 12 = 30,00 Gew.% Citronella Java Öl + 14,50 Gew.% Sojaöl + 4,50 Gew.% Citronensäure + 50,00 Gew.% Wasser
   WS 13 = 10,00 Gew.% Citronella Java Öl + 4,50 Gew.% Kokosöl + 1,00 Gew.% Citronensäure + 84,00 Gew.% Wasser
   WS 14=10,00 Gew.% Citronella Java Öl + 10,00 Gew.% Kokosöl + 2,00 Gew.%Citronensäure + 68,00 Gew.% Wasser
   WS 15 = 20,00 Gew.% Citronella Java Öl + 4,50 Gew.% Sojaöl + 1,00 Gew.% Citronensäure + 84,00 Gew.% Wasser
   WS 16 = 20,00 Gew.% Citronella Java Öl + 10,00 Gew.% Sojaöl + 2,00 Gew.% Citronensäure + 68,00 Gew.% Wasser
   WS 17 = 12,50 Gew.% Citronella Java Öl + 10,00 Gew.% Kokosöl + 1,25 Gew.%Citronensäure + 0,90 Gew.% Natriumhydrogencarbonat + 75,35 Gew.% Wasser
   WS 18 = 12,50 Gew.% Citronella Java Öl + 10,00 Gew.% Sojaöl + 1,25 Gew.% Citronensäure + 0,90 Gew.% Natriumhydrogencarbonat + 2,50 Gew.% PEG-40 hydrogenated Castor Oil (USP) + 72,85 Gew.% Wasser
   WS 19 = 10,00 Gew.% Citronella Java Öl + 7,50 Gew.% Kokosöl + 1,00 Gew.% Citronensäure + 0,70 Gew.% Natriumhydrogencarbonat + 2,00 Gew.% PEG-40 hydrogenated Castor Oil (USP) + 78,80 Gew.% Wasser
   WS 20 =15,00 Gew.% Citronella Java Öl + 10,00 Gew.% Sojaöl + 1,50 Gew.% Citronensäure + 1,00 Gew.% Natriumhydrogencarbonat + 3,00 Gew.% PEG-40 hydrogenated Castor Oil (USP) + 69,50 Gew.% Wasser

### Testserien zur Ermittlung der repellenten Wirkung auf Stechmücken:

### 1. Versuchsanordnung:

Alle Tests wurden nach der bewährten Versuchsvorschrift des Schweizerischen Tropeninstitutes mit standardisierter Methodik zur Erzielung vergleichbarer und reproduzierbarer Ergebnisse durchgeführt. Dazu gelangen als Testtiere ausschließlich laborgezogene, weibliche, adulte, daher geschlechtsreife und damit blutbedürftige Exemplare der Art Aedes aegypti (Gelbflebermücken) und bei den hier als wirksam erkannten Produkten adäquate Exemplare der Art Anopheles gambiae (Fiebermücken) zur Verwendung, da diese beiden Arten auch weltweit durch die Übertragung von Malaria und Gelbfieber das höchste Gesundheitsgefährdungspotential für den Menschen darstellen.

In einen Zuchtkäfig mit den Maßen 40 x 40 x 40 cm werden 400 Mücken eingesetzt, denen am Vortag das Nahrungsmittel Zuckerwasser entzogen wurde, was erfahrungsgemäß deren Aggressionspotential erhöht. Dies entspricht einer sehr hohen Populationsdichte, wie sie in der freien Natur kaum jemals vorkommt und ermöglicht somit eine treffsichere Differenzierung der Wirkung der einzelnen getesteten Substanzen im Vergleich zueinander.

Als Probanden dienten Biologie- und Zoologiestudenten, die sich als Versuchspersonen freiwillig zur Verfügung stellten und die auf Grund ihrer Kenntnisse auch in der Lage waren, die Versuchsreihen mit wissenschaftlicher Genauigkeit durchzuführen und zu bewerten.

Für jeden Versuchstag wurde jeder der beiden Unterarme der jeweiligen Versuchsperson auf einer Fläche von ca. 250 cm³ mit den entsprechenden Testprodukten vollflächig deckend behandelt und auf der Oberarmabdeckung markiert. Eine Menge von 2 ml der entsprechenden Testsubstanz wurde auf der Testfläche gleichmäßig verteilt. Die behandelte Unterarmfläche wurde, sowohl zum Oberarm als auch zur Handwurzel hin, mit einem mückenstichdichten Klebeband über einem kurzen Kunststoffschlauch abgedichtet. Die unbehandelte Hand wurde mit einem dicken Handschuh überzogen und diente so gleichzeitig als Kontrolle für die Stechaktivität der Mücken, da diese bei Stechlust auf diesem absitzen und versuchen durch das Gewebe hindurch in die darunter liegende Haut zu stechen.

Für jeden Test wurde die Hand und der präparierte Unterarm, nach 1-stündiger Wartezeit nach Auftragung der Zusammensetzung, erst der linke und dann der rechte stündlich für jeweils 10 Minuten in den Käfig gehalten und während dieser Zeit die Zahl der Stechmücken notiert, die
(a) durch den Handschuh zu stechen versuchten (positive Kontrolle),
(b) die behandelte Fläche näher als 3 cm anflogen, aber wieder abdrehten (Femhaltewirkung)
(c) auf der behandelten Fläche länger als 2 Sekunden sitzen blieben, aber nicht stachen und
(d) in die behandelte Haut einstachen und Blut saugten.

Diese Prozedur wurde solange fortgesetzt bis eine, oder mehrere Mücken Kriterium d) erfüllte(n).

Jeder Proband führte nur einen Versuch an einem Tag durch, um die Gefahr von Produktkumulierungen und eventuellen Kreuzreaktionen der Produkte auf ungenügend gereinigter Haut zu vermeiden.

Produkte mit sehr schlechter Wirkung und Produkte mit sehr guter Wirkung wurden kontrollhalber, zur Vermeidung eventueller Fehlergebnisse auf Grund von Auftragsfehlern auf die Haut, irrtümlicher Produktabrieb u. ä. von einer anderen Versuchsperson an einem anderen Tag noch einmal getestet. Dies war bei den Beispielen PC1, PC2, PC3 und PC4 der Fall, die unerwartet schlechte Ergebnisse erbrachten und bei den Beispielen WS17, WS18, WS19 und WS20 die ein unerwartetes, überraschend hohes, Wirkungspotential aufwiesen.

Die Auswertung aller Versuchsergebnisse zeigt deutlich, dass die erfindungsgemäßen Zusammensetzungen WS eine, im Vergleich zu den, in der Zusammensetzung ähnlichen, aber in der Kombination außerhalb der Kombinationen der erfindungsgemäßen Zusammensetzungen liegenden Einzelsubstanzen und deren Mischungen PC, nicht nahegelegte Wirksamkeit in der Abwehr von gesundheitsgefährdenden, blutsaugenden Mücken aufweisen, aber auch im Vergleich zu einem anerkannten Produkt des Marktes REF eine überlegende Wirksamkeit zu zeigen.

### 2. Versuchsergebnisse: Die Ergebnisse sind in den folgenden Tabellen zusammengefasst.

### Legende:

1 = Zeit nach der Applikation des jeweiligen Testproduktes in Stunden
2 = Expositionsdauer innerhalb der 10-minütigen Testdauer je Stunde; bei Stichen Abbruch und Angabe der Minuten der dadurch verkürzten Expositionsdauer
a = absitzende Mücken auf dem Handschuh
b = anfliegende Mücken, die die behandelte Fläche näher als 3 cm anflogen und wieder abdrehten, ohne abzusitzen und kürzer als 2 Sekunden auf der Testfläche absitzende Mücken
c = auf der behandelten Fläche länger als 2 Sekunden absitzende Mücken, die aber nicht stachen und somit, zusammen mit den Mücken des Kriteriums b den Belästigungsfaktor darstellen
d = Anzahl der stechenden Mücken vor Abbruch des Versuches
# = Anzahl konnte auf Grund der zu kurzen Zeit bis es zu Stichen kam nicht erhoben werden
* = Abbruch auf Grund von Stichen

**Ergebnisse der Wirksamkeit der Einzelsubstanzen und außerhalb der erfindungsgemäßen Zusammensetzungen liegenden Mischungen und des Referenzproduktes ANTI BRUMM, enthaltend als Wirkstoff 30% N,N-Diethyl-m-toluamid gegen Aedes aegypti:**

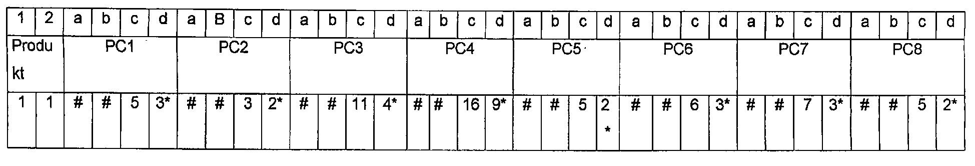

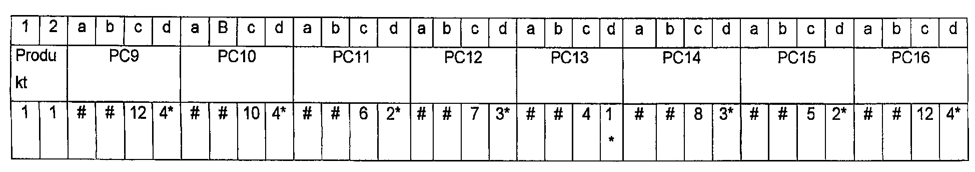

**Nach- und Bestätigungstests von PC1, 2, 3, 4 an anderen Probanden und zu anderer Zeit an anderen Exemplaren A. aegypti:**

| | | | | | | | | | | | | | | | | | |
|---|---|---|---|---|---|---|---|---|---|---|---|---|---|---|---|---|---|
| 1 | 2 | a | b | c | d | a | b | c | d | a | b | c | d | a | b | c | d |
| **Produkt** | | **PC1** | | | | **PC2** | | | | **PC3** | | | | **PC4** | | | |
| 1 | 1 | # | # | 8 | 4* | # | # | 5 | 2* | # | # | 6 | 2* | # | # | 13 | 7* |

### Referenzprodukt:

| | | | | | |
|---|---|---|---|---|---|
| 1 | 2 | a | b | c | d |
| 1 | 10 | 130 | 4 | 0 | 0 |
| 2 | 10 | 150 | 32 | 2 | 0 |
| 3 | 10 | 150 | 45 | 9 | 0 |
| 4 | 6 | 180 | 30 | 8 | 2* |

**Ergebnisse der Wirksamkeit der erfindungsgemäßen Zusammensetzungen in der Abhaltewirkung (Repellenz) gegen A. aegypti:** Zusatz zu Legende: (x) bei Parameter d = Minute des 1. Stiches in der 10-minütigen Testperiode

| | | | | | | | | | | | | | | | | | |
|---|---|---|---|---|---|---|---|---|---|---|---|---|---|---|---|---|---|
| 1 | 2 | a | b | c | d | a | b | c | d | a | b | c | d | a | b | c | d |
| Produkt | | WS1 | | | | WS2 | | | | WS3 | | | | WS4 | | | |
| 1 | 10 | 120 | 5 | 1 | 0 | 130 | 8 | 2 | 0 | 130 | 0 | 0 | 0 | 120 | 3 | 0 | 0 |
| 2 | 10 | 130 | 14 | 4 | 1 (8)* | 130 | 16 | 6 | 2 (5)* | 130 | 8 | 2 | 0 | 120 | 11 | 4 | 0 |
| 3 | 10 | | | | | | | | | 100 | 21 | 6 | 2 (6)* | 110 | 23 | 7 | 3 (4)* |

| | | | | | | | | | | | | | | | | | |
|---|---|---|---|---|---|---|---|---|---|---|---|---|---|---|---|---|---|
| 1 | 2 | a | b | c | d | a | b | c | d | a | b | c | d | a | b | c | d |
| Produkt | | WS9 | | | | WS10 | | | | WS13 | | | | WS14 | | | |
| 1 | 10 | 150 | 0 | 0 | 0 | 120 | 0 | 0 | 0 | 130 | 0 | 0 | 0 | 140 | 0 | 0 | 0 |
| 2 | 10 | 120 | 3 | 0 | 0 | 110 | 0 | 0 | 0 | 140 | 2 | 0 | 0 | 130 | 0 | 0 | 0 |
| 3 | 10 | 100 | 12 | 3 | 0 | 120 | 6 | 0 | 0 | 100 | 4 | 0 | 0 | 120 | 4 | 0 | 0 |
| 4 | 10 | 90 | 23 | 7 | 3 (3* | 110 | 12 | 3 | 1 (5)* | 130 | 10 | 1 | 0 | 140 | 7 | 0 | 0 |
| 5 | 10 | | | | | | | | | 80 | 18 | 5 | 3 (4)* | 100 | 8 | 3 | 1 (9)* |

| | | | | | | | | | | | | | | | | | |
|---|---|---|---|---|---|---|---|---|---|---|---|---|---|---|---|---|---|
| 1 | 2 | a | b | c | d | a | b | c | d | a | b | c | d | a | b | c | d |
| Produkt | | WS17 | | | | WS18 | | | | WS19 | | | | WS20 | | | |
| 1 | 10 | 110 | 0 | 0 | 0 | 120 | 0 | 0 | 0 | 150 | 0 | 0 | 0 | 120 | 0 | 0 | 0 |
| 2 | 10 | 110 | 0 | 0 | 0 | 130 | 0 | 0 | 0 | 120 | 0 | 0 | 0 | 130 | 0 | 0 | 0 |
| 3 | 10 | 120 | 0 | 0 | 0 | 130 | 0 | 0 | 0 | 130 | 0 | 0 | 0 | 120 | 0 | 0 | 0 |
| 4 | 10 | 120 | 3 | 0 | 0 | 120 | 5 | 1 | 0 | 110 | 4 | 1 | 0 | 110 | 0 | 0 | 0 |
| 5 | 10 | 110 | 11 | 5 | 0 | 100 | 12 | 4 | 0 | 100 | 21 | 5 | 0 | 100 | 0 | 0 | 0 |
| 6 | 10 | 70 | 14 | 8 | 0 | 100 | 23 | 6 | 0 | 100 | 23 | 7 | 0 | 80 | 16 | 2 | 0 |
| 7 | 10 | 70 | 3 | 3 | 3 (2)* | 90 | 3 | 3 | 3 (3)* | 100 | 10 | 4 | 0 | 80 | 14 | 2 | 0 |
| 8 | 10 | | | | | | | | | 50 | 10 | 2 | 2 (2)* | 80 | 35 | 15 | 3 (8)* |

### Nach- und Bestätigungstests von WS17, WS18, WS19, WS20 an anderen Probanden und zu anderer Zelt an anderen Exemplaren A. aegypti:

| | | | | | | | | | | | | | | | | | |
|---|---|---|---|---|---|---|---|---|---|---|---|---|---|---|---|---|---|
| 1 | 2 | a | b | c | d | a | b | c | d | a | b | c | d | a | b | c | d |
| **Produkt** | | **WS17** | | | | **WS18** | | | | **WS19** | | | | **WS20** | | | |
| 1 | 10 | 130 | 0 | 0 | 0 | 110 | 0 | 0 | 0 | 90 | 0 | 0 | 0 | 90 | 0 | 0 | 0 |
| 2 | 10 | 130 | 0 | 0 | 0 | 110 | 0 | 0 | 0 | 110 | 0 | 0 | 0 | 120 | 0 | 0 | 0 |
| 3 | 10 | 130 | 0 | 0 | 0 | 110 | 0 | 0 | 0 | 100 | 0 | 0 | 0 | 110 | 0 | 0 | 0 |
| 4 | 10 | 100 | 5 | 1 | 0 | 110 | 8 | 2 | 0 | 120 | 0 | 0 | 0 | 120 | 0 | 0 | 0 |
| 5 | 10 | 100 | 9 | 3 | 0 | 110 | 15 | 6 | 0 | 120 | 17 | 3 | 0 | 120 | 0 | 0 | 0 |
| 6 | 10 | 80 | 17 | 7 | 0 | 80 | 28 | 12 | 2 (10)* | 80 | 25 | 10 | 0 | 100 | 11 | 0 | 0 |
| 7 | 10 | 60 | 4 | 4 | 1(1)* | | | | | 70 | 25 | 15 | 3(9)* | 90 | 18 | 4 | 0 |
| 8 | 10 | | | | | | | | | | | | | 30 | 15 | 8 | 2 (4)* |

Auch die Nachtests bestätigten die überraschend gute Wirksamkeit der erfindungsgemäßen Zusammensetzungen WS17 bis WS20 trotz deren relativ niedrigen Gehalten an Wirkstoffen.

| | | | | | | | | | | | | | | | | | |
|---|---|---|---|---|---|---|---|---|---|---|---|---|---|---|---|---|---|
| 1 | 2 | a | b | c | d | a | b | c | d | a | b | c | d | a | b | c | d |
| Produkt | | WS11 | | | | WS12 | | | | WS15 | | | | WS16 | | | |
| 1 | 10 | 70 | 0 | 0 | 0 | 100 | 0 | 0 | 0 | 120 | 0 | 0 | 0 | 140 | 0 | 0 | 0 |
| 2 | 10 | 100 | 0 | 0 | 0 | 130 | 0 | 0 | 0 | 120 | 0 | 0 | 0 | 130 | 0 | 0 | 0 |
| 3 | 10 | 110 | 0 | 0 | 0 | 120 | 0 | 0 | 0 | 120 | 0 | 0 | 0 | 130 | 0 | 0 | 0 |
| 4 | 10 | 120 | 2 | 0 | 0 | 120 | 3 | 2 | 0 | 100 | 0 | 0 | 0 | 100 | 0 | 0 | 0 |
| 5 | 10 | 80 | 10 | 2 | 0 | 120 | 8 | 3 | 0 | 100 | 11 | 8 | 0 | 90 | 3 | 0 | 0 |
| 6 | 10 | 80 | 13 | 4 | 0 | 100 | 12 | 6 | 0 | 100 | 28 | 17 | 3(3)* | 90 | 10 | 3 | 0 |
| 7 | 10 | 60 | 2 | 2 | 2(2)* | 40 | 2 | 2 | 2(1)* | | | | | 70 | 14 | 7 | 2(6)* |

| | | | | | | | | | | | | | | | | | |
|---|---|---|---|---|---|---|---|---|---|---|---|---|---|---|---|---|---|
| 1 | 2 | a | b | c | d | a | b | c | d | a | b | c | d | a | b | c | d |
| Produkt | | WS5 | | | | WS6 | | | | WS7 | | | | WS8 | | | |
| 1 | 10 | 120 | 0 | 0 | 0 | 110 | 0 | 0 | 0 | 100 | 0 | 0 | 0 | 110 | 0 | 0 | 0 |
| 2 | 10 | 130 | 0 | 0 | 0 | 120 | 0 | 0 | 0 | 110 | 0 | 0 | 0 | 110 | 0 | 0 | 0 |
| 3 | 10 | 130 | 0 | 0 | 0 | 110 | 0 | 0 | 0 | 100 | 0 | 0 | 0 | 120 | 0 | 0 | 0 |
| 4 | 10 | 120 | 0 | 0 | 0 | 130 | 0 | 0 | 0 | 110 | 0 | 0 | 0 | 120 | 0 | 0 | 0 |
| 5 | 10 | 120 | 0 | 0 | 0 | 130 | 0 | 0 | 0 | 110 | 0 | 0 | 0 | 120 | 0 | 0 | 0 |
| 6 | 10 | 120 | 0 | 0 | 0 | 130 | 2 | 0 | 0 | 110 | 0 | 0 | 0 | 120 | 2 | 0 | 0 |
| 7 | 10 | 120 | 0 | 0 | 0 | 120 | 8 | 2 | 0 | 110 | 0 | 0 | 0 | 120 | 4 | 0 | 0 |
| 8 | 10 | 120 | 2 | 0 | 0 | 130 | 25 | 0 | 0 | 100 | 10 | 0 | 0 | 110 | 22 | 1 | 0 |
| 9 | 10 | 120 | 2 | 0 | 0 | 140 | 35 | 3 | 0 | 100 | 10 | 0 | 0 | 110 | 35 | 3 | 0 |
| 10 | 10 | 120 | 8 | 4 | 0 | 100 | 30 | 16 | 0 | 80 | 5 | 0 | 0 | 110 | 38 | 14 | 0 |
| 11 | 10 | 90 | 26 | 12 | 0 | 30 | 5 | 2 | 2(2)* | 80 | 7 | 1 | 0 | 20 | 12 | 8 | 3(2)* |
| 12 | 10 | 10 | 3 | 3 | 3(1)* | | | | | 40 | 7 | 4 | 2(4)* | | | | |

### Ergebnisse der Wirksamkeit erfindungsgemäßer Zusammensetzungen in der Abhaltewirkung (Repellenz) gegen Anopheles gambiae:

| | | | | | | | | | | | | | | | | | |
|---|---|---|---|---|---|---|---|---|---|---|---|---|---|---|---|---|---|
| 1 | 2 | a | b | c | d | a | b | c | d | a | b | c | d | a | b | c | d |
| Produkt | | WS5 | | | | WS12 | | | | WS17 | | | | WS20 | | | |
| 1 | 10 | 70 | 0 | 0 | 0 | 60 | 0 | 0 | 0 | 90 | 0 | 0 | 0 | 40 | 0 | 0 | 0 |
| 2 | 10 | 90 | 0 | 0 | 0 | 60 | 0 | 0 | 0 | 110 | 0 | 0 | 0 | 40 | 0 | 0 | 0 |
| 3 | 10 | 100 | 0 | 0 | 0 | 80 | 0 | 0 | 0 | 120 | 0 | 0 | 0 | 100 | 0 | 0 | 0 |
| 4 | 10 | 100 | 0 | 0 | 0 | 100 | 0 | 0 | 0 | 100 | 0 | 0 | 0 | 80 | 0 | 0 | 0 |
| 5 | 10 | 110 | 0 | 0 | 0 | 100 | 0 | 0 | 0 | 110 | 0 | 0 | 0 | 70 | 0 | 0 | 0 |
| 6 | 10 | 120 | 0 | 0 | 0 | 100 | 8 | 0 | 0 | 90 | 0 | 0 | 0 | 100 | 2 | 0 | 0 |
| 7 | 10 | 110 | 0 | 0 | 0 | 90 | 17 | 0 | 0 | 90 | 4 | 0 | 0 | 100 | 4 | 0 | 0 |
| 8 | 10 | 110 | 0 | 0 | 0 | 900 | 12 | 3 | 0 | 90 | 12 | 0 | 0 | 100 | 4 | 0 | 0 |
| 9 | 10 | 90 | 0 | 0 | 0 | 100 | 17 | 3 | 0 | 80 | 15 | 4 | 0 | 90 | 10 | 0 | 0 |
| 10 | 10 | 80 | 3 | 0 | 0 | 70 | 32 | 11 | 0 | 70 | 15 | 10 | 0 | 90 | 18 | 1 | 0 |
| 11 | 10 | 60 | 6 | 4 | 0 | 10 | 17 | 10 | 2(1)* | 50 | 40 | 9 | 1(4)* | 80 | 22 | 6 | 0 |
| 12 | 10 | 60 | 24 | 18 | 4 | | | | | | | | | 60 | 45 | 21 | 4(7)* |
| | | | | | (10)* | | | | | | | | | | | | |

### Untersuchung der Wirksamkeit der erfindungsgemäßen Zusammensetzungen im Vergleich zu einer unbehandelten Kontrolle und einem Referenzprodukt in der Abhaltewirkung gegen Zecken im Labortest am Meerschweinchen

Insgesamt zwölf adulten weiblichen Meerschweinchen wurden die rechten Flanken im Ausmaß ca. 4x4 cm rasiert und die Haut und die umgebenden behaarten Stellen per Hand mit je ca. 2 ml des jeweiligen Testproduktes vollflächig deckend behandelt. Danach wurde jede Stunde jedem Meerschweinchen je 1 laborgezogene, adulte, zwei Wochen lang ausgehungerte Zecke der Gattung Gemeiner Holzbock (Ixodes ricinus) mittels Pinzette in die Mitte der behandelten , rasierten Fläche aufgesetzt und deren Verhalten beobachtet. Die Meerschweinchen waren dazu nicht wie üblich sediert, um eine möglichst naturgetreue Situation zu simulieren, sondern wurden mit Salat gefüttert und blieben ziemlich ruhig, da sie an menschliche Umgebung gewöhnt sind.

Auffallend war sofort, dass die Zecken nicht, wie auf dem unbehandelten Meerschweinchen, das als Kontrolltier (KT) diente, wandernd begannen, eine für einen Einstich günstige Stelle zu suchen (normalerweise eine Beugefalte unter den Hinterbeinen), sondern sich über einige Minuten auf der behandelten Fläche in einem engen Kreis bewegten und dann, bei der geringsten Bewegung ihrer Wirte auf den Boden des Käfigs abfielen, obwohl Zecken normalerweise mit ihren Haltekrallen selbst auf glatten Flächen Halt zu finden vermögen. Die abgefallenen Zecken wurden sofort in beschriftete Gläser verbracht und über 72 Stunden beobachtet, wo sich allesamt als tot erwiesen.

### Probandenliste und Versuchsprodukte:

- die unbehandelte Kontrolle wurde mit KT,
- das mit Referenzprodukt ANTI BRUMM behandelte Versuchstier mit REF und
- die mit den erfindungsgemäßen Zusammensetzungen behandelten Versuchstiere mit WS3, WS7, WS9, WS12, WS14, WS16, WS17, WS18, WS19, und WS20 gekennzeichnet:

### Ergebnisse der Wirksamkeit:

**KT** : jede der einzeln innerhalb der Testzeit über 8 Stunden stündlich angesetzten Zecken begann, nach kurzer Orientierungsphase, alsbald einzubohren und Blut zu saugen, worauf sie sofort abgenommen wurden, um das Kontrolltier nicht zu schwächen.
**REF :** die Zecken der ersten 2 Stunden fielen wie bei den Produkten der WS-Serie ab und waren innerhalb von 72 Stunden tot. Die Zecke der 3. Stunde begann sich einzubohren, worauf der Versuch abgebrochen wurde und die Schutzzeit damit 2 Stunden betrug.

### Schutzzeiten der erfindungsgemäßen Zusammensetzungen gegen Zecken am Meerschweinchen:

**X = Schutzzeit**
Y = Zeitpunkt des erstmaligen Einbohrens einer frisch angesetzten Zecke

| Produkt | WS3 | WS7 | WS9 | WS12 | WS14 | WS16 | WS17 | WS18 | WS19 | WS20 |
|---|---|---|---|---|---|---|---|---|---|---|
| 1 Std. | | | | | | | | | | |
| 2 Std. | | | | | | | | | | |
| 3 Std. | **x** | | | | | | | | | |
| 4 Std. | y | | **x** | | **x** | | | | | |
| 5 Std. | | | y | | y | **x** | **x** | | **x** | |
| 6 Std. | | | | **x** | | y | y | **x** | y | |
| 7 Std. | | **x** | | y | | | | y | | **x** |
| 8 Std. | | y | | | | | | | | y |

Alle ohne Einbohrversuche abgefallenen Zecken waren innerhalb der Beobachtungszeit von 72 Stunden tot.

## Patentansprüche

1. Zusammensetzung, umfassend 4,5 - 50 Gew.% etherisches Citronella Java Öl aus Cymbopogon Winterianus Jowitt, 3-30 Gew.% pflanzliches Triglycerid und 0,1 - 10 Gew.% mindestens einer organischen Säure, sowie ein Lösungsmittel und/oder einen Trägerstoff.

2. Zusammensetzung nach Anspruch 1, **dadurch gekennzeichnet, dass** das pflanzliche Triglycerid Kokosöl ist.

3. Zusammensetzung nach Anspruch 1, **dadurch gekennzeichnet, dass** das pflanzliche Triglycerid Sojabohnenöl ist.

4. Zusammensetzung nach mindestens einem der Ansprüche 1 bis 3, **dadurch gekennzeichnet, dass** die Zusammensetzung in der Form einer wässrigen Lösung vorliegt.

5. Zusammensetzung nach mindestens einem der Ansprüche 1 bis 4, in Form einer Emulsion, Dispersion, Lotion, Creme, Lösung oder eines Gels.

6. Verwendung einer Zusammensetzung nach mindestens einem der Ansprüche 1 bis 5, zur Abwehr von fliegenden, kriechenden, stechenden, beißenden und saugenden Schädlingen und Lästlingen.

## Claims

1. Composition, comprising 4.5-50 % by weight ethereal Citronella Java Oil from Cymbopogon Winterianus Jowitt, 3-30 % by weight vegetable triglyceride and 0.1-10 % by weight of at least one organic acid, and a solvent and/or a carrier substance.

2. Composition according to claim 1, **characterised in that** the vegetable triglyceride is coconut oil.

3. Composition according to claim 1, **characterised in that** the vegetable triglyceride is soybean oil.

4. Composition according to at least one of claims 1 to 3, **characterised in that** the composition is present in the form of an aqueous solution.

5. Composition according to at least one of claims 1 to 4, in the form of an emulsion, a dispersion, a lotion, a cream, a solution or a gel.

6. Use of a composition according to at least one of claims 1 to 5, for repelling flying, crawling, stinging, biting and sucking insects and pests.

## Revendications

1. Composition comprenant 4,5-50 % en poids d'huile éthérée de citronnelle de Java de *Cymbopogon Winterianus Jowitt,* 3-30 % en poids de triglycéride végétal et 0,1-10 % en poids d'au moins un acide organique, ainsi qu'un solvant et/ou un support.

2. Composition selon la revendication 1, **caractérisée en ce que** le triglycéride végétal est l'huile de coco.

3. Composition selon la revendication 1, **caractérisée en ce que** le triglycéride végétal est l'huile de soja.

4. Composition selon au moins l'une des revendications 1 à 3, **caractérisée en ce que** la composition se présente sous forme d'une solution aqueuse.

5. Composition selon au moins l'une des revendications 1 à 4, sous forme d'une émulsion, dispersion, lotion, crème, solution ou gel.

6. Utilisation d'une composition selon au moins l'une des revendications 1 à 5, pour repousser les parasites et indésirables volants, rampants, piquants, mordants et suceurs.
